# EUROPEAN PATENT APPLICATION

(11) **EP 4 811 867 A1**
(43) Date of publication of application: **23.09.2026**
(21) Application number: 24891233.9
(22) Date of filing: 31.10.2024
(51) Int. Cl.: H04W 36/36, H04W 28/04, H04W 36/08, H04W 92/10

(54) **TERMINAL**

(30) Priority: 16.11.2023 JP 2023195525
(71) Applicant: NTT DOCOMO, INC., Tokyo 100-6150 (JP)
(72) Inventor: MIN, Tianyang, Tokyo 100-6150 (JP); YAMASHITA, Kouki, Tokyo 100-6150 (JP); INOUE, Shoki, Tokyo 100-6150 (JP)
(74) Representative: Hoffmann Eitle
(86) International application number: PCT/JP2024/038862
(87) International publication number: WO 2025/105192

(57) **Abstract**

To provide a terminal capable of quickly resolving a PDCP SN gap due to transmission of an incremented count value. A terminal including a control unit that executes transition to a candidate cell without requesting a base station for the transition in a layer lower than a Radio Resource Control layer, and a transmission unit that transmits, to the candidate cell, a message including a count value for deriving a security key required every time the candidate cell is changed, wherein, when the message is not received, the control unit includes, in the message transmitted to another candidate cell, a count value obtained by incrementing the count value, and an instruction to expire a timer for detecting a loss of a packet in a Packet Data Convergence Protocol (PDCP) layer.

## Description

### TECHNICAL FIELD

The present disclosure relates to a terminal.

### BACKGROUND ART

The 3rd Generation Partnership Project (3GPP (registered trademark)) has specified the 5th generation mobile communication system (also referred to as 5G, New Radio (NR), or Next Generation (NG)), and is also proceeding with the specification of the next generation called Beyond 5G, 5G Evolution, or 6G.

In 3GPP Release 18, expansion of layer 1/layer 2 mobility (L1/L2 mobility) is discussed. L1/L2 mobility is also referred to as Lower layer Triggered Mobility (LTM), and is a technology related to mobility of a terminal (User Equipment, UE) in L1/L2, for example, handover (HO) (Non-Patent Literature 1). HO in L1/L2 is controlled by a lower layer which is a layer lower than a Radio Resource Control (RRC) layer. Note that, as described above, mobility in L1/L2 may be referred to as LTM, but hereinafter, for convenience of description, HO in L1/L2 is particularly referred to as LTM.

Further, in LTM, when a Radio Link Failure (RLF) or LTM execution Failure (hereinafter, also referred to as LTM Failure) occurs, it has been agreed to support fast recovery to a candidate cell (Non-Patent Literature 2).

Incidentally, in LTM, LTM Failure (hereinafter, also referred to as LTM cell switch failure) may occur after an RRC reconfiguration complete message including a count value for security key derivation (keystream) is transmitted to a candidate cell. In this case, since all state variables including the count value also return to the original state, the count value is not incremented. Thereby, there is a possibility that an RRC reconfiguration complete message including the same count value is transmitted to another candidate cell. That is, there is a possibility that the same count value is reused (Non-Patent Literature 3).

### CITATION LIST

### NON-PATENT LITERATURE

Non-Patent Literature 1: "Further NR Mobility Enhancements", RP-222332, 3GPP TSG RAN Meeting #97-e, 3GPP, September 12-16, 2022
Non-Patent Literature 2: "Status Report to TSG", RP-231311, 3GPP TSG RAN Meeting #100, 3GPP, June 12-14, 2023
Non-Patent Literature 3: "Keystream reuse issue caused by fast recovery after LTM cell switch", R2-2313310, 3GPP TSG-RAN WG2 Meeting #124, 3GPP, November 13-17, 2023

### SUMMARY OF INVENTION

Thus, even if an LTM cell switch failure occurs after transmission of RRC reconfiguration complete, it is conceivable to maintain the increment of the count value without reverting the count value for TX_NEXT of the PDCP state variable. This makes it possible to prevent reuse of the count value in the keystream. However, since the incremented count value (for example, N+1) is transmitted where the original count value (for example, N) should essentially be transmitted, a PDCP SN gap occurs. The PDCP SN gap cannot be resolved until the PDCP t-reordering timer expires. That is, the UE has to wait until the PDCP t-reordering timer expires, and there is a fear that fast cell transition (fast recovery), which is the original purpose of LTM, may be hindered.

Therefore, the present disclosure has been made in view of such a situation, and an object thereof is to provide a terminal capable of quickly resolving a PDCP SN gap due to transmission of an incremented count value.

One aspect of the disclosure is a terminal (UE 200) including a control unit (control unit 240) that executes transition to a candidate cell without requesting a base station for the transition in a layer lower than a Radio Resource Control layer, and a transmission unit (transmission/reception unit 210) that transmits, to the candidate cell, a message including a count value for deriving a security key required every time the candidate cell is changed, wherein, when the message is not received, the control unit includes, in the message transmitted to another candidate cell, a count value obtained by incrementing the count value, and an instruction to expire a timer for detecting a loss of a packet in a Packet Data Convergence Protocol (PDCP) layer.

### BRIEF DESCRIPTION OF DRAWINGS

[Fig. 1] Fig. 1 is a schematic diagram of an overall configuration of a radio communication system.
[Fig. 2] Fig. 2 is a diagram
   showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a terminal.
[Fig. 5] Fig. 5 is a functional block diagram of a base station.
[Fig. 6] Fig. 6 is a sequence chart showing an example of LTM.
[Fig. 7] Fig. 7 is a flowchart showing an example of fast recovery in LTM when RLF/HOF/LTM Failure occurs.
[Fig. 8] Fig. 8 is a sequence chart showing an example of fast recovery in LTM when BF occurs.
[Fig. 9] Fig. 9 is a flowchart showing an example of fast recovery in LTM when BF occurs.
[Fig. 10] Fig. 10 is a flowchart showing an example of fast recovery when increment of a count value is maintained.
[Fig. 11] Fig. 11 is a diagram showing an example of a hardware configuration of the base station and the terminal.
[Fig. 12] Fig. 12 is a diagram showing a configuration example of a vehicle.

### DESCRIPTION OF EMBODIMENTS

Hereinafter, embodiments will be described based on the drawings. Note that the same functions and configurations are denoted by the same or similar symbols, and the description thereof will be omitted as appropriate.

### (1) Overall Schematic Configuration of Radio Communication System

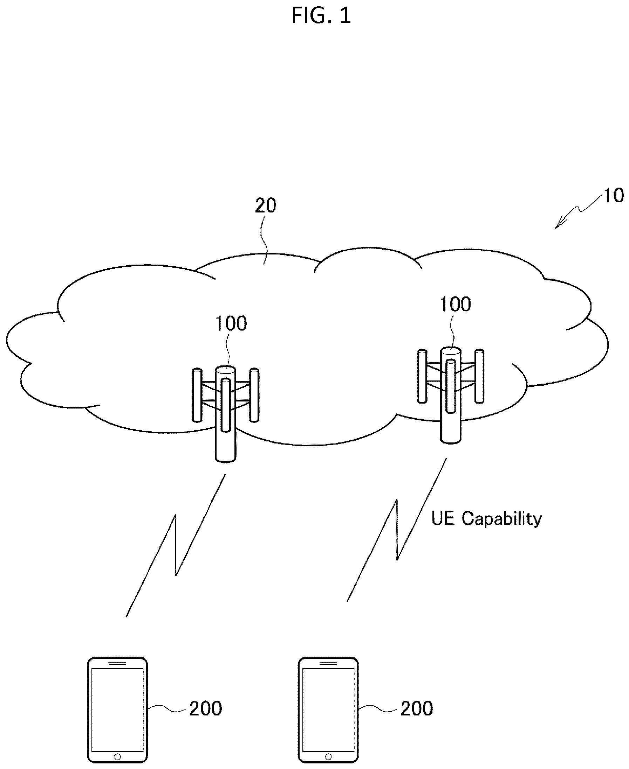

A radio communication system 10 shown in Fig. 1 is a radio communication system according to a scheme called 5G. On the other hand, the radio communication system 10 may be a radio communication system according to a scheme called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, Carrier Aggregation (CA) that bundles and uses a plurality of component carriers (CCs), Dual Connectivity (DC) that performs simultaneous communication with two base stations, and the like.

As shown in Fig. 1, the radio communication system 10 includes a base station (gNodeB, gNB) 100 connected to a Next Generation-Radio Access Network (NG-RAN) 20, and a terminal (User Equipment, UE) 200 performing radio communication with the gNB 100. The NG-RAN 20 is connected to a Core Network (CN) (not shown). The CN is configured by a Network Function (NF) such as an Access and Mobility Management Function (AMF). The NG-RAN 20 and the CN may be simply expressed as a "network", and may be interpreted as being included in the radio communication system 10 or may be interpreted as not being included therein. Note that a specific configuration of the radio communication system 10, for example, the numbers of gNBs 100 and UEs 200, is not limited to the example shown in Fig. 1.

The UE 200 of the embodiment supports HO (hereinafter, also referred to as LTM) controlled in Layer 1/Layer 2 (L1/L2, for example, Medium Access Control (MAC) layer) which is a lower layer than Layer 3 (L3, for example, RRC layer). That is, the UE 200 can transition to a selected cell or a candidate cell in transition of the lower layer (hereinafter, also referred to as an LTM candidate cell, or simply referred to as a candidate cell) based on control of the lower layer. LTM has a merit that time required for HO is short as compared with HO controlled in the conventional L3. Note that, hereinafter, HO may be referred to as transition.

Further, the UE 200 of the embodiment supports fast recovery in LTM. Fast recovery in LTM is a mechanism of transitioning to a candidate cell without requesting the gNB 100 for transition to the candidate cell when a predetermined condition is satisfied, similarly to, for example, that in CHO. Note that the request for transition to the candidate cell may be read as a request for RRC re-connection to the candidate cell or transmission of an RRC re-establishment request to the candidate cell.

Fast recovery in LTM is executed, for example, when the UE 200 detects a communication failure with the gNB 100. Note that the failure referred to here may be interpreted as a concept including not only the above-mentioned RLF and LTM Failure but also Handover Failure (HOF) and Beam Failure (BF). In other words, RLF, LTM Failure, HOF, and BF may be read as each other in terms of communication failure with the gNB 100.

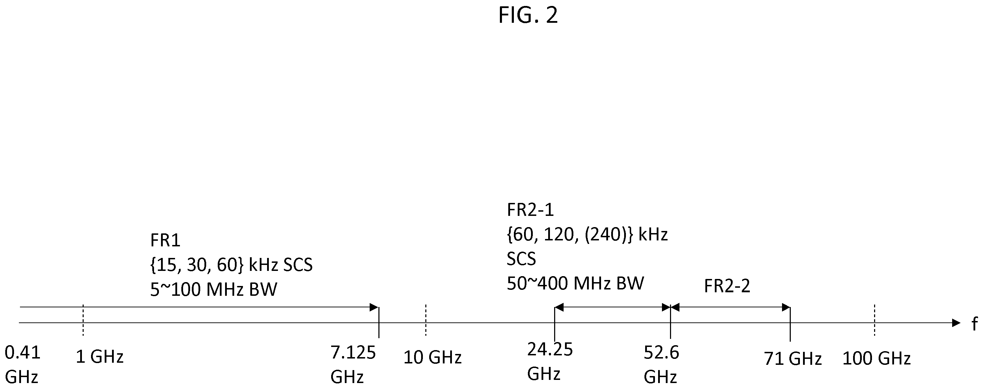

Further, the radio communication system 10 may correspond to a plurality of frequency ranges (FRs). That is, as shown in Fig. 2, the radio communication system 10 may correspond to the following FRs.
- FR1: 410 MHz to 7.125 GHz
- FR2-1: 24.25 GHz to 52.6 GHz
- FR2-2: Exceeding 52.6 GHz to 71 GHz

In FR1, a Sub-Carrier Spacing (SCS) of 15, 30, or 60 kHz and a Bandwidth (BW) of 5 to 100 MHz may be used. In FR2-1, an SCS of 60 or 120 kHz (240 kHz may be included) and a BW of 50 to 400 MHz may be used.

In FR2-2, in order to avoid an increase in phase noise, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied.

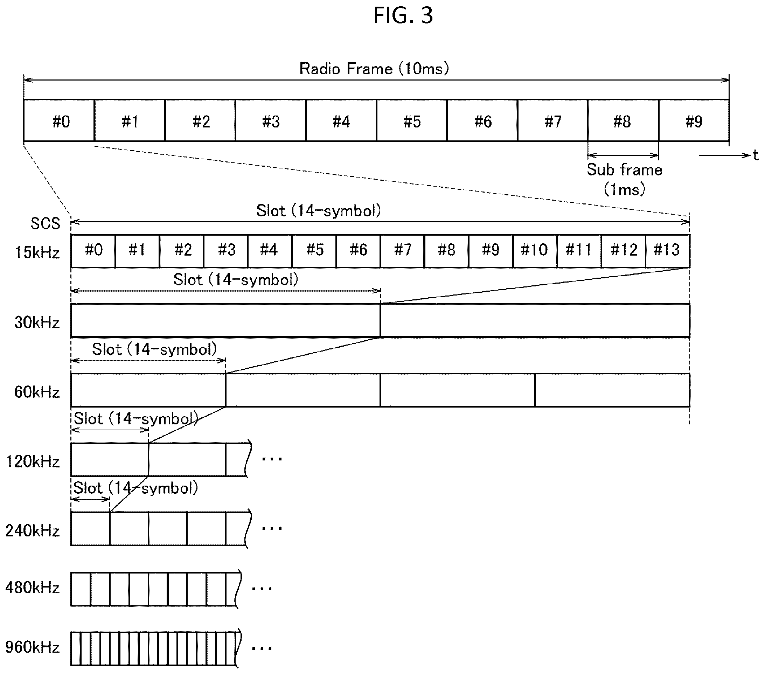

Further, as shown in Fig. 3, one slot in the radio communication system 10 is composed of 14 symbols. When this configuration is maintained, the larger (wider) the SCS, the shorter the symbol period (and slot period). Note that the SCS is not limited to the frequency shown in Fig. 3, and may be a frequency such as 480 kHz or 960 kHz, for example.

Further, the number of symbols constituting one slot does not necessarily have to be 14 symbols, and may be, for example, 28 or 56 symbols. Furthermore, the number of slots per subframe may differ depending on the SCS.

### (2) Functional Block Configuration of Radio Communication System

### (2.1) Functional Block Configuration of Terminal

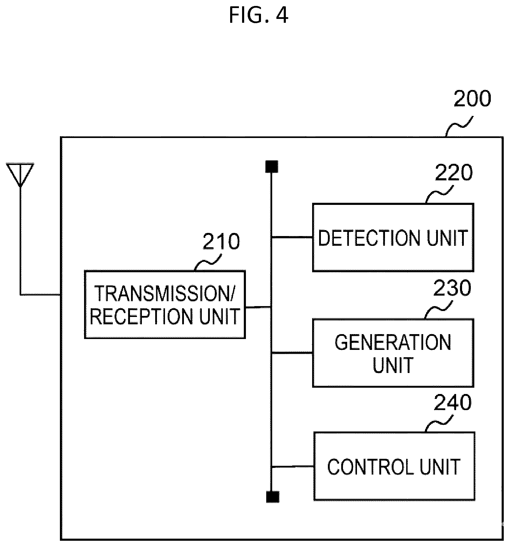

As shown in Fig. 4, the UE 200 includes a transmission/reception unit 210, a detection unit 220, a generation unit 230, and a control unit 240.

The transmission/reception unit 210 transmits and receives radio signals to and from the gNB 100. Note that the transmission/reception unit 210 may constitute a transmission unit that transmits radio signals to the gNB 100 and a reception unit that receives radio signals from the gNB 100.

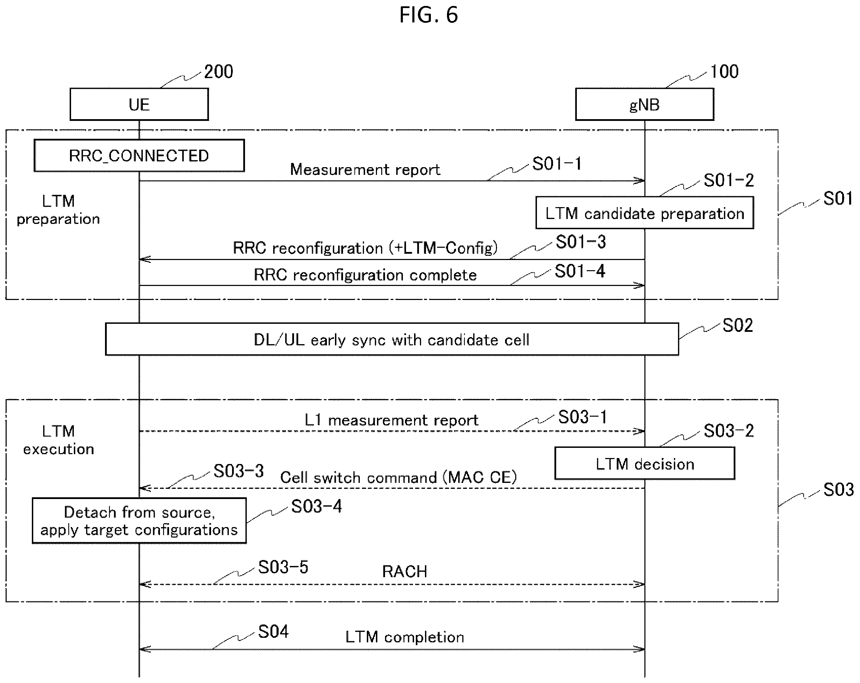

The transmission/reception unit 210 of the embodiment transmits a measurement report to the gNB 100. The measurement report includes a conventional measurement report transmitted in L3 (for example, RRC layer) and an L1 measurement report transmitted in L1 (see Fig. 6). Further, the transmission/reception unit 210 transmits various messages such as RRC reconfiguration complete to the gNB 100. Note that the measurement report may be generated by the generation unit 230 when a failure is detected by the detection unit 220. Similarly, various messages may be generated by the generation unit 230.

The transmission/reception unit 210 of the embodiment can transmit a message (for example, RRC reconfiguration complete) including a count value to the LTM candidate cell. The count value is a parameter for deriving a security key required every time the LTM candidate cell is changed in LTM. The count value may be an incremented count value as described later. The increment may be interpreted as setting a count value, which is, for example, N, to N+1.

The transmission/reception unit 210 of the embodiment receives a reconfiguration message (for example, RRC Reconfiguration) from the gNB 100 in the RRC layer. The reconfiguration message may include various IEs such as configuration information related to transition of the lower layer (LTM) (for example, LTM-Config). The reconfiguration message of the embodiment may particularly include reconfiguration information related to LTM (for example, attemptLTM-Reconfig, attemptLTM-switch), and may further include configuration information for BFR related to the LTM candidate cell (for example, BFR-Config for LTM). Note that attemptLTM-Reconfig and attemptLTM-switch are tentative names, and other names may be used as long as they are IEs having the same functions. The same applies to other IEs. The IEs that can be included in the reconfiguration message will be described in detail in the section of Operation Examples.

The transmission/reception unit 210 of the embodiment may receive a MAC Control Element (CE) from the gNB 100 in the MAC layer. The MAC CE may include a Cell switch command (see Fig. 6).

The detection unit 220 detects various failures such as RLF, LTM Failure, HOF, and BF described above. Specifically, the detection unit 220 determines whether or not a communication failure has occurred with the gNB 100 by measuring the quality of a serving cell formed by the gNB 100 or the quality of a beam in the serving cell and comparing the quality with a predetermined threshold. Further, the detection unit 220 can measure the quality of the LTM candidate cell, or the quality of another beam in the serving cell or a beam in the LTM candidate cell. Note that the quality of these cells or beams may be determined as to pass or fail by, for example, the control unit 240 based on comparison with a predetermined threshold.

The detection unit 220 may output a measurement result to the generation unit 230 in order for the generation unit 230 to generate a measurement report. Further, the detection unit 220 may output a measurement result to the control unit 240 in order for the control unit 240 to execute cell selection or beam selection in LTM.

The generation unit 230 generates measurement reports and various messages. Measurement reports and various messages will be described in detail in the section of Operation Examples.

The control unit 240 controls transmission/reception of radio signals by the transmission/reception unit 210, detection of various failures by the detection unit 220, and generation of measurement reports and various messages by the generation unit 230.

The control unit 240 of the embodiment executes HO of the UE 200. The control unit 240 may execute HO in L3 or HO (LTM) in L1/L2. Note that executing HO/LTM may mean executing HO/LTM based on control (determination of HO/LTM) by the control unit 130 of the gNB 100, but particularly in the embodiment, it may mean executing fast recovery not based on determination of HO/LTM by the gNB 100. In other words, the control unit 240 can transition to the LTM candidate cell without requesting the gNB 100 for transition to the LTM candidate cell. Hereinafter, transition to the LTM candidate cell by the control unit 240 will be briefly described.

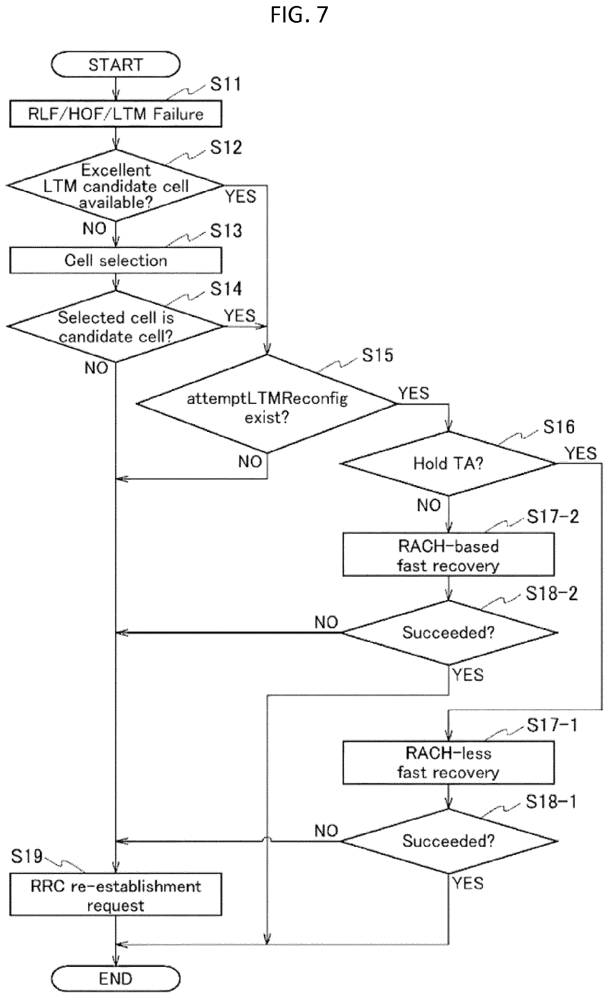

That is, the control unit 240 can select a cell and transition to the selected cell (selected cell) in HO/LTM. At this time, if the selected cell is an LTM candidate cell and the reconfiguration information related to LTM described above is included in the reconfiguration message transmitted from the gNB 100, the control unit 240 can apply the configuration related to this LTM candidate cell and transition to the LTM candidate cell without requesting the gNB 100 for transition to the LTM candidate cell. Note that a more detailed sequence will be described in detail in the section of Operation Examples (see Fig. 7). Note that selection of a cell may be performed based on the measurement result described above, and the LTM candidate cell may be interpreted as a cell formed by the gNB 100 supporting LTM. Further, the selected cell may be interpreted as a cell determined to be transitioned to, and the candidate cell may be interpreted as a cell having a possibility of being transitioned to.

Further, the control unit 240 can transition to the LTM candidate cell without selecting a cell in HO/LTM. That is, the control unit 240 can determine an LTM candidate cell to transition to based on a predetermined threshold among LTM candidate cells, and transition to the LTM candidate cell. In this case, the control unit 240 can apply the configuration related to this LTM candidate cell and transition to the LTM candidate cell without requesting the gNB 100 for transition to the LTM candidate cell. Note that a more detailed sequence will be described in detail in the section of Operation Examples (see Fig. 7).

Further, before executing HO/LTM, the control unit 240 can acquire TA for the LTM candidate cell from the gNB 100 via the transmission/reception unit 210. TA is a parameter for advancing transmission timing for the LTM candidate cell. When the UE 200 holds TA for the LTM candidate cell, the UE 200 can transition to the LTM candidate cell without executing random access to the gNB 100 (omitting random access). Note that, when the UE 200 does not hold TA for the LTM candidate cell, the UE 200 can execute random access to the gNB 100 and transition to the LTM candidate cell. The former is also referred to as RACH-less fast recovery, and the latter is also referred to as RACH-based fast recovery.

Further, in HO/LTM, when the selected cell is not an LTM candidate cell, or when the reconfiguration information related to LTM described above is not included in the reconfiguration message transmitted from the gNB 100, the control unit 240 may request the gNB 100 for transition to the LTM candidate cell. Specifically, the control unit 240 may transmit an RRC re-establishment request to the gNB 100.

Further, the control unit 240 may start a timer after applying the configuration related to the LTM candidate cell described above. This timer is, for example, an LTM-timer described later. When this timer expires before transitioning to the LTM candidate cell, the control unit 240 may request the gNB 100 for transition to the LTM candidate cell. Specifically, the control unit 240 may transmit an RRC re-establishment request to the gNB 100.

Furthermore, in HO/LTM, the control unit 240 may select a beam in the serving cell and execute BFR. Particularly, the control unit 240 of the embodiment can select a beam in the LTM candidate cell when the configuration information for BFR related to the LTM candidate cell described above is included in the reconfiguration message transmitted from the gNB 100. For example, when the beam in the serving cell is equal to or less than a predetermined threshold, a beam in the LTM candidate cell (exceeding a predetermined threshold) can be selected. Note that there may be a plurality of beams in the serving cell, and in that case, when all the beams in the serving cell are equal to or less than the predetermined threshold, a beam in the LTM candidate cell (exceeding a predetermined threshold) may be selected. Details of various configuration information (IEs) that can be included in the reconfiguration message will be described later, but main ones will be described below.

The reconfiguration message may include configuration information related to the LTM candidate cell, and the configuration information for BFR related to the LTM candidate cell does not have to be included in the configuration information related to the LTM candidate cell. Further, the configuration information for BFR related to the LTM candidate cell includes configuration information for DL and configuration information for UL, and at least one of the configuration information for DL or the configuration information for UL may include information related to the beam of the LTM candidate cell.

Further, when the quality of the beam in the serving cell described above exceeds a predetermined threshold, the control unit 240 may select the beam in the serving cell instead of selecting the beam in the LTM candidate cell. Further, when the quality of the beam in the LTM candidate cell described above is equal to or less than a predetermined threshold, the control unit 240 may request the gNB 100 for transition to the LTM candidate cell. Specifically, the control unit 240 may transmit an RRC re-establishment request to the gNB 100.

The control unit 240 of the embodiment can include a count value in RRC reconfiguration complete transmitted by the transmission/reception unit 210.

In LTM, the control unit 240 of the embodiment increments the count value (N) after the transmission/reception unit 210 transmits RRC reconfiguration complete including the count value (N). Thereby, when performing LTM again, the control unit 240 can include the incremented count value (N+1) in RRC reconfiguration complete transmitted by the transmission/reception unit 210 to another LTM candidate cell. With such a mechanism, it is possible to securely connect with each LTM candidate cell in LTM.

Furthermore, the control unit 240 of the embodiment can maintain the increment of the count value without reverting the incremented count value (N+1) to the original count value (N) even if an LTM cell switch failure occurs after the transmission/reception unit 210 transmits RRC reconfiguration complete including the count value (N).

When an LTM cell switch failure occurs, that is, when RRC reconfiguration complete transmitted to the LTM candidate cell is not received, or even when the original count value (N) is not normally used, the control unit 240 of the embodiment can include the incremented count value (N+1) instead of the original count value (N) in RRC reconfiguration complete transmitted by the transmission/reception unit 210 to another LTM candidate cell when performing LTM again. In this case, the control unit 240 can include, in RRC reconfiguration complete transmitted by the transmission/reception unit 210 to the other LTM candidate cell, an instruction to cause the gNB 100 to expire a timer for detecting a loss of a packet in a Packet Data Convergence Protocol (PDCP) layer (for example, t-reordering timer). Alternatively, the control unit 240 can include, in RRC reconfiguration complete transmitted by the transmission/reception unit 210 to the other LTM candidate cell, an instruction indicating to stop and reconfigure this timer. Note that the packet may be read as a term such as a data unit, a Protocol Data Unit (PDU), or a Service Data Unit (SDU).

The control unit 240 of the embodiment can include an instruction to clear buffer data of the PDCP layer in RRC reconfiguration complete transmitted by the transmission/reception unit 210 to another LTM candidate cell.

The control unit 240 of the embodiment can include an instruction indicating that LTM is intra-CU LTM in RRC reconfiguration complete transmitted by the transmission/reception unit 210 to another LTM candidate cell. Note that LTM may be read as LTM fast recovery.

The control unit 240 of the embodiment can include an instruction to regard a packet of the count value (N), that is, the count value before increment, as having been received, in RRC reconfiguration complete transmitted by the transmission/reception unit 210 to another LTM candidate cell.

The control unit 240 of the embodiment can include a dummy of a packet of the count value (N), that is, the count value before increment, in RRC reconfiguration complete transmitted by the transmission/reception unit 210 to another LTM candidate cell.

The control unit 240 of the embodiment can include an instruction indicating to treat the RRC reconfiguration complete as out of order delivery in RRC reconfiguration complete transmitted by the transmission/reception unit 210 to another LTM candidate cell. Note that out of order delivery may mean that packets or messages are not in transmission order.

### (2.2) Functional Block Configuration of Base Station

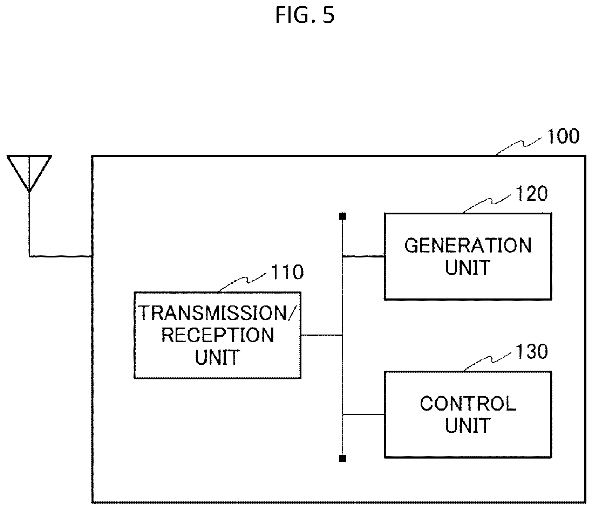

As shown in Fig. 5, the gNB 100 includes a transmission/reception unit 110, a generation unit 120, and a control unit 130.

The transmission/reception unit 110 transmits and receives radio signals to and from the UE 200. Note that the transmission/reception unit 110 may constitute a transmission unit that transmits radio signals to the UE 200 and a reception unit that receives radio signals from the UE 200.

The transmission/reception unit 110 of the embodiment transmits a reconfiguration message (for example, RRC Reconfiguration) to the UE 200 in the RRC layer. The reconfiguration message may include various IEs such as configuration information related to transition of the lower layer (LTM) (for example, LTM-Config). The reconfiguration message of the embodiment may particularly include reconfiguration information related to LTM (for example, attemptLTM-Reconfig, attemptLTM-switch), and may further include configuration information for BFR related to the LTM candidate cell (for example, BFR-Config for LTM). Note that IEs that can be included in the reconfiguration message will be described in detail in the section of Operation Examples.

The transmission/reception unit 110 of the embodiment may transmit a MAC Control Element (CE) to the UE 200 in the MAC layer. The MAC CE may include a Cell switch command (see Fig. 6).

The transmission/reception unit 110 of the embodiment receives the measurement reports and various messages described above from the UE 200.

The generation unit 120 generates various messages such as the reconfiguration message and the Cell switch command described above.

The control unit 130 controls transmission/reception of radio signals by the transmission/reception unit 110 and generation of various messages by the generation unit 120.

The control unit 130 of the embodiment may prepare an LTM candidate cell based on a measurement report received via the transmission/reception unit 110. Further, configuration information related to this LTM candidate cell may be included in the reconfiguration message described above.

Further, the control unit 130 may control HO/LTM of the UE 200. The control unit 130 may control HO in L3 or HO (LTM) in L1/L2. Note that controlling HO/LTM may mean determining HO/LTM by the UE 200.

### (3) Operation of Radio Communication System

### (3.1) Issues

### (3.1.1) Issue 1

Fast recovery in LTM is a mechanism of transitioning to a candidate cell without requesting a base station for transition to the candidate cell when a predetermined condition is satisfied, similarly to, for example, that in conditional handover (CHO). However, since fast recovery in LTM differs from fast recovery in CHO in a part where the RRC layer is involved, there is a problem that the mechanism of fast recovery in CHO cannot be applied as it is. In fast recovery of CHO, if a cell selected by the UE for re-connection after occurrence of a failure is a candidate cell, fast recovery is executed if there is reconfigurationWithSync, and an RRC re-establishment request is transmitted if there is no reconfigurationWithSync. There is a problem that such a mechanism cannot be applied as it is to fast recovery in LTM.

### (3.1.2) Issue 2

When a beam failure occurs in LTM, if another beam in the serving cell does not satisfy a predetermined condition (for example, the quality of the other beam exceeds a predetermined threshold), transition to a candidate cell other than the serving cell has been requested to the base station. However, even in such a case, there is a case where a beam satisfying the predetermined condition exists in the candidate cell. In such a case, there is a demand to utilize the beam satisfying the predetermined condition in the candidate cell to recover from the beam failure.

### (3.1.3) Issue 3

Even if an LTM cell switch failure occurs after transmission of RRC reconfiguration complete, it is conceivable to maintain the increment of the count value without reverting the count value for TX_NEXT of the PDCP state variable. This makes it possible to prevent reuse of the count value in the keystream. However, since the incremented count value (N+1) is transmitted where the original count value (for example, N) should essentially be transmitted, a PDCP SN gap occurs. The PDCP SN gap cannot be resolved until the PDCP t-reordering timer expires. That is, the UE has to wait until the PDCP t-reordering timer expires, and there is a fear that fast cell transition (fast recovery), which is the original purpose of LTM, may be hindered.

### (3.2) Operation Examples

### (3.2.0) Overview

A sequence of LTM which is a premise of the operation example will be described with reference to Fig. 6. The sequence of LTM is executed in the order of LTM preparation (step S01), early sync (step S02), LTM execution (step S03), and LTM completion (step S04) as a broad framework.

First, on the premise that the UE 200 is in an RRC connected state with the gNB 100, the UE 200 transmits a measurement report to the gNB 100 (step S01-1). The measurement report includes, for example, a measurement result for the quality of the serving cell of the UE 200. Next, the gNB 100 prepares an LTM candidate cell (step S01-2) and transmits an RRC reconfiguration message to the UE 200 (step S01-3). The RRC reconfiguration message includes LTM-Config. LTM-Config includes, for example, LTM-CandidateConfig which is configuration information of the LTM candidate cell. In response to this, the UE 200 transmits an RRC reconfiguration complete message (step S01-4).

Next, the UE 200 executes DL/UL early sync for the LTM candidate cell formed by the gNB 100 (step S02). Specifically, DL/UL early sync is executed by SSB/RACH or the like. Thereby, the UE 200 can acquire TA for the LTM candidate cell. TA is a parameter for advancing transmission timing for the LTM candidate cell. Note that the UE 200 does not have to acquire TA for the LTM candidate cell.

Next, the UE 200 transmits an L1 measurement report to the gNB 100 (step S03-1). The L1 measurement report includes, for example, a measurement result for the quality of the serving cell of the UE 200. Next, the gNB 100 determines LTM (step S03-2) and transmits a MAC CE to the UE 200 (step S03-3). The MAC CE includes a Cell switch command. In response to this, the UE 200 releases the connection with the serving cell and applies the configuration related to the LTM candidate cell (step S03-4). Finally, the UE 200 executes RACH with the gNB 100 (step S03-5), whereby transition to the LTM candidate cell is completed (step S04). Note that, when the UE 200 holds TA, step S03-5 can be omitted.

### (3.2.1) Operation Example 1

Operation Example 1 will be described with reference to Fig. 6 and Fig. 7. In Operation Example 1, LTM-Config (see step S01-3) may include an IE indicating that the UE 200 is caused to support LTM fast recovery. This IE is, for example, attemptLTM-Reconfig which is reconfiguration information related to transition of the lower layer. Note that, as described above, attemptLTM-Reconfig is a tentative name, and other names may be used as long as they are IEs having a function of causing the UE 200 to support fast recovery in LTM.

Further, the RRC reconfiguration message (see step S01-3) may include not only LTM-Config but also other IEs necessary for the UE 200 to support LTM fast recovery. The other IE is, for example, SpCellConfig. SpCellConfig includes, for example, LTM-CellSwitchInfo which is information related to cell change of the lower layer, and LTM-timer which is a timer for determining completion of fast recovery in LTM.

First, when the UE 200 detects RLF/HOF/LTM Failure in the sequence of LTM shown in Fig. 6 (specifically, step S02 or step S03) (step S11), the UE 200 measures the quality of the LTM candidate cell, and when the quality exceeds a predetermined threshold, determines to transition to the LTM candidate cell (YES in step S12). Further, when attemptLTM-Reconfig is included in LTM-Config (YES in step S15), the UE 200 transitions to the LTM candidate cell determined in YES of step S12. Specifically, the configuration related to the LTM candidate cell (LTM-CandidateConfig) is applied, and fast recovery after step S16 described later can be executed. Note that, in LTM, for example, a reference signal (RS) of the LTM candidate cell may be configured for the UE 200 in advance in step S01-3 described above, and the UE 200 can measure the quality of the LTM candidate cell based on this RS.

On the other hand, when the quality of the LTM candidate cell does not exceed the predetermined threshold (NO in step S12), the UE 200 selects a cell to re-connect (cell of transition destination) (step S13). Further, the UE 200 may start cell selection and start a timer T311. Note that step S12 may be omitted, and in that case, the process proceeds from step S11 to step S13.

When the cell selected in step S13 (hereinafter, also referred to as a selected cell) is an LTM candidate cell (YES in step S14), and when attemptLTM-Reconfig is included in LTM-Config (YES in step S15), the UE 200 can apply the configuration related to the LTM candidate cell (LTM-CandidateConfig) and execute fast recovery after step S16 described later. Note that "attemptLTM-Reconfig is included in LTM-Config" may be read as "attemptLTM-Reconfig is included in LTM-Config, and CellSwitchInfo and LTM-timer are included in SpCellConfig" for the reason described above.

After applying LTM-CandidateConfig in YES of step S15, the UE 200 may start LTM-timer included in SpCellConfig. LTM-timer may be, for example, timer T304.

After YES of step S15, when the UE 200 has acquired TA in step S02 described above (YES in step S16), the UE 200 executes RACH-less fast recovery (step S17-1). Since RACH-less fast recovery can transition to the LTM candidate cell without executing RACH, that is, random access to the gNB 100 (that is, by transmitting RRCReconfigurationComplete according to resource allocation of UL grant configured in advance from the gNB 100), time required for recovery can be shortened. Note that, when the TA acquired by the UE 200 is not valid (for example, when the TA timer has expired), YES of step S16 may be read as NO of step S16, and the process may proceed to step S17-2 described later.

When RACH-less fast recovery is successful (YES in step S18-1), the flow ends. When RACH-less fast recovery fails (NO in step S18-1) such as when LTM-timer expires before fast recovery is completed, the UE 200 requests the gNB 100 for transition to the LTM candidate cell (step S19). Specifically, the UE 200 transmits an RRC re-establishment request. Further, the UE 200 may start timer T301 after transmitting the RRC re-establishment request.

On the other hand, when the UE 200 has not acquired TA in step S02 described above (NO in step S16), the UE 200 executes RACH-based fast recovery (step S17-2). RACH-based fast recovery executes RACH, that is, random access to the gNB 100 to transition to the LTM candidate cell (see step S03).

When RACH-based fast recovery is successful (YES in step S18-2), the flow ends. When RACH-based fast recovery fails (NO in step S18-2) such as when LTM-timer expires before fast recovery is completed, the UE 200 requests the gNB 100 for transition to the LTM candidate cell (step S19). Specifically, the UE 200 transmits an RRC re-establishment request. Further, the UE 200 may start timer T301 after transmitting the RRC re-establishment request.

Further, in the case of NO in step S14 and step S15 described above, the UE 200 may proceed to step S19, and further start timer T301 in step S19. Specifically, when the selected cell is not an LTM candidate cell (NO in step S14), or when attemptLTM-Reconfig is not included in LTM-Config (NO in step S15), the process proceeds to step S19. Note that "attemptLTM-Reconfig is not included in LTM-Config" may be read as "attemptLTM-Reconfig is not included in LTM-Config, or either CellSwitchInfo or LTM-timer is not included in SpCellConfig" for the reason described above.

### (3.2.2) Operation Example 2

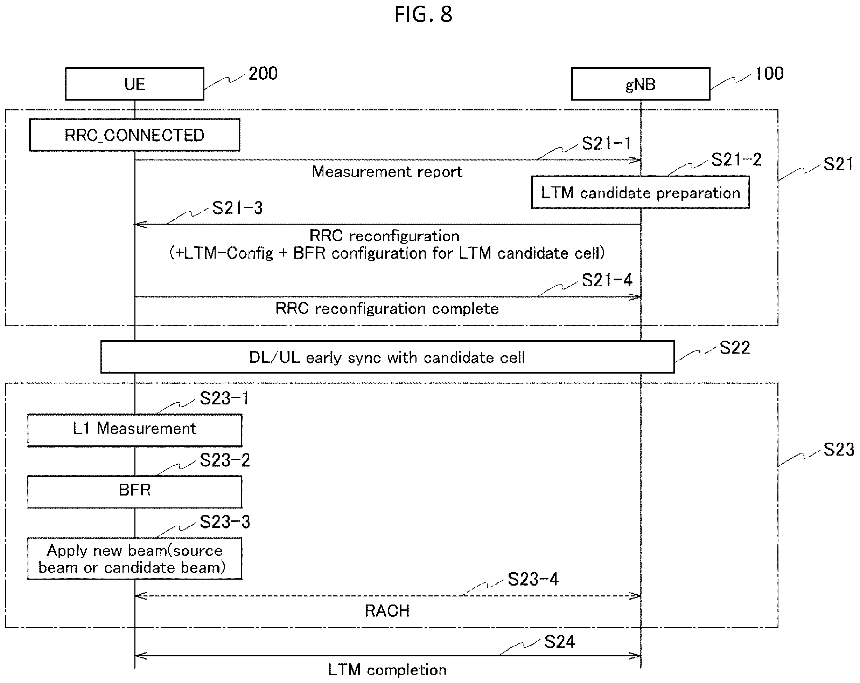

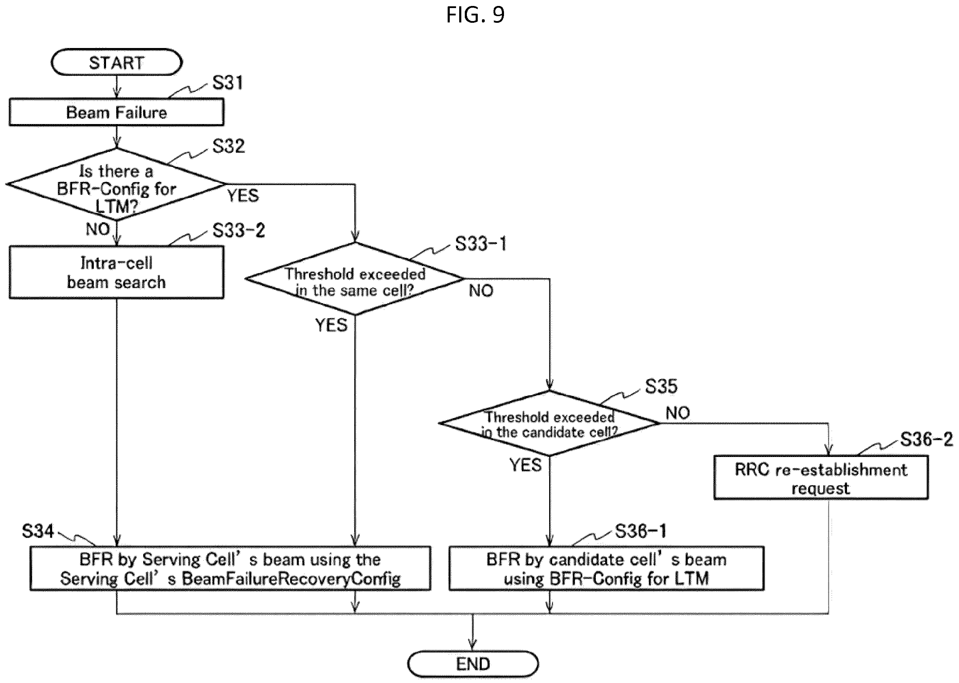

Operation Example 2 will be described with reference to Fig. 8 and Fig. 9. First, fast recovery in LTM when BF occurs will be described with reference to Fig. 8. The sequence of fast recovery in LTM when BF occurs has many parts in common with the sequence of LTM shown in Fig. 6, and for example, step S22 is common to step S02 described above, so the description thereof will be omitted.

Further, in step S21, step S21-1, step S21-2, and step S21-4 are common to step S01-1, step S01-2, and step S01-4, respectively, so the description thereof will be omitted. Therefore, step S21-3 will be described. In step S21-3, the gNB 100 transmits an RRC reconfiguration message to the UE 200. The RRC reconfiguration message includes LTM-Config. LTM-Config includes, for example, LTM-CandidateConfig which is configuration information of the LTM candidate cell. Furthermore, the RRC reconfiguration message includes a configuration for performing Beam Failure Recovery (BFR) for the LTM candidate cell (hereinafter, also referred to as BFR configuration for LTM candidate cell, or BFR-Config for LTM). BFR-Config for LTM is configuration information for BFR related to the LTM candidate cell.

BFR-Config for LTM may be located lower than LTM-Config as a hierarchy of IE included in the RRC reconfiguration message, but may be located higher. In other words, BFR-Config for LTM may be located so as to be included in LTM-Config, but may be located so as not to be included in LTM-Config. Similarly, BFR-Config for LTM may be located lower than LTM-CandidateConfig included in LTM-Config, but may be located higher. In other words, BFR-Config for LTM may be located so as to be included in LTM-CandidateConfig, but may be located so as not to be included in LTM-CandidateConfig. In the latter case, BFR-Config for LTM may be located so as to be included in LTM-Config and so as not to be included in LTM-CandidateConfig.

BFR-Config for LTM may include, for example, BWP-Downlink which is configuration information for downlink related to the LTM candidate cell, and BWP-Uplink which is configuration information for uplink related to the LTM candidate cell.

BWP-Downlink may include IEs such as BWP-Id, BWP-Common, and BWP-Dedicated. BWP-Dedicated may include BeamFailureRecoveryRSConfig. Furthermore, BeamFailureRecoveryRSConfig may include configuration information related to a beam of the LTM candidate cell (configuration information of UL). Specifically, CandidateBeamRSList in BeamFailureRecoveryRSConfig may include configuration information related to a beam of the LTM candidate cell (configuration information of UL).

BWP-Uplink may include IEs such as BWP-Id, BWP-Common, and BWP-Dedicated. BWP-Dedicated may include BeamFailureRecoveryConfig. Furthermore, BeamFailureRecoveryConfig may include configuration information related to a beam of the LTM candidate cell (configuration information of DL). Specifically, CandidateBeamRSList in BeamFailureRecoveryConfig may include configuration information related to a beam of the LTM candidate cell (configuration information of DL).

As described above, in step S21-3, configuration information for BFR related to the LTM candidate cell may be configured for the UE 200, and further, configuration information related to a beam of the LTM candidate cell may be configured.

Further, the UE 200 may select a beam in the LTM candidate cell when holding both BeamFailureRecoveryRSConfig and BeamFailureRecoveryConfig.

Returning to Fig. 8, step S23 will be described. Note that description will be made assuming that BF has occurred after step S22, description of which is omitted, is completed. The UE 200 measures the quality of a beam in the serving cell formed by the gNB 100 or the quality of a beam in the candidate cell in L1 (step S23-1). Note that RS for measuring the quality of the beam is the same as in Operation Example 1, so detailed description thereof will be omitted. After measuring the quality of the beam, the UE 200 selects a beam whose quality exceeds a predetermined threshold and executes BFR (step S23-2), and further, the UE 200 applies a configuration related to the selected new beam (step S23-3). Finally, the UE 200 executes RACH with the gNB 100 (step S23-4), whereby selection of the new beam is completed (step S24). Note that, when the UE 200 holds TA, step S23-4 can be omitted.

Note that Operation Example 2 may be applied to inter-CU LTM or may be applied to intra-CU LTM.

Finally, a specific flow of fast recovery in LTM when BF occurs will be described with reference to Fig. 9. First, when the UE 200 detects BF in the sequence of LTM when BF occurs shown in Fig. 8 (for example, between step S02 and step S03) (step S31), and when BFR-Config for LTM is configured in step S21-3 described above (YES in step S32), the UE 200 measures a beam in the same cell (serving cell). When the quality of the beam having the best quality among beams in the serving cell exceeds a predetermined threshold (YES in step S33-1), the UE 200 performs BFR to the beam having the best quality (using the beam having the best quality) using BeamFailureRecoveryConfig of the serving cell (step S34). Note that BeamFailureRecoveryConfig may be included in the RRC reconfiguration message in step S21-3 described above and configured for the UE 200.

On the other hand, when BFR-Config for LTM is not configured in step S21-3 described above (NO in step S32), the UE 200 may search for a beam in the same cell (serving cell) (step S33-2) and proceed to step S34.

Here, returning to step S33-1, when the quality of the beam having the best quality among beams in the serving cell is equal to or less than the predetermined threshold (NO in step S33-1), the UE 200 measures a beam in the LTM candidate cell. When the quality of the beam having the best quality among beams in the LTM candidate cell exceeds a predetermined threshold (YES in step S35), the UE 200 performs BFR to the beam having the best quality (using the beam having the best quality) using BFR-Config for LTM (step S36-1).

On the other hand, when the quality of the beam having the best quality among beams in the LTM candidate cell is equal to or less than the predetermined threshold (NO in step S35), the UE 200 requests the gNB 100 for transition to the LTM candidate cell (step S36-2). Specifically, the UE 200 transmits an RRC re-establishment request. Further, the UE 200 may start timer T301 after transmitting the RRC re-establishment request.

### (3.2.3) Operation Example 3

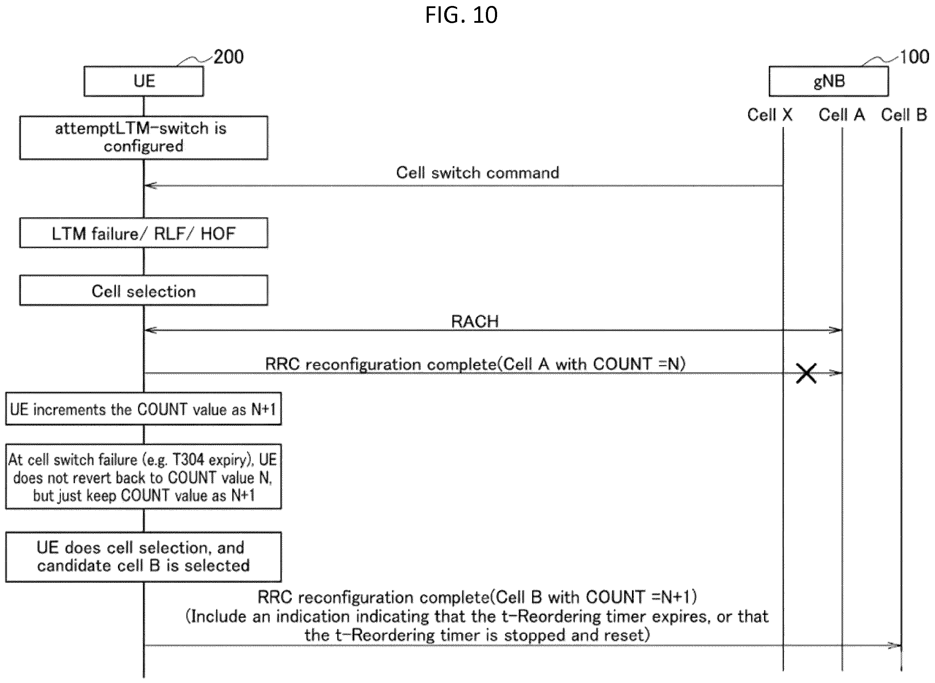

Operation Example 3 will be described with reference to Fig. 10. As a premise of Operation Example 3, it is assumed that an IE indicating that the UE 200 is caused to support LTM fast recovery, for example, attemptLTM-switch which is reconfiguration information related to transition of the lower layer, is configured for the UE 200. Note that, as described above, attemptLTM-switch is a tentative name, and other names may be used as long as they are IEs having a function of causing the UE 200 to support fast recovery in LTM. Further, Operation Example 3 will be described as being applied to SRB1 as described later, but is not limited thereto, and may be applied to other SRBs or DRBs.

Further, the gNB 100 in Operation Example 3 is not limited to a Master Node (MN) in DC, but may be a Secondary Node (SN). Accordingly, LTM in Operation Example 3 may be read as inter-SN PSCell LTM.

The UE 200 receives a Cell switch command from a connected cell X. Note that this Cell switch command may be interpreted as being the same as the Cell switch command in step S03-3 of Fig. 6.

Here, when LTM failure occurs, the UE 200 performs cell selection while timer T311 is running. When the selected cell is an LTM candidate cell (for example, Cell A in the figure), an RACH-based LTM cell switch procedure is performed (RACH in the figure).

Next, the UE 200 transmits RRCReconfigurationComplete including the count value (N) to Cell A via SRB1. At this time, the UE 200 increments the count value (N) in SRB1 to N+1.

Here, it is assumed that transmission of RRCReconfigurationComplete is not successful and LTM cell switch failure occurs (for example, timer T304 has expired). In this case, the UE 200 does not have to revert the incremented count value (N+1) in SRB1 to the count value (N) of the source configuration. That is, the UE 200 can maintain the incremented count value (N+1).

Further, the UE 200 performs cell selection again and selects another LTM candidate cell (for example, Cell B in the figure). The UE 200 transmits RRCReconfigurationComplete including the incremented count value (N+1) to Cell B via SRB1. Here, in order to eliminate the waiting time of the UE 200 accompanying the occurrence of the PDCP SN gap described above, that is, in order to resolve the delay accompanying the occurrence of the PDCP SN gap, the UE 200 can include at least one of a to f shown below in RRCReconfigurationComplete transmitted to Cell B.
a: Instruction to expire the t-reordering timer in the gNB 100, or instruction to stop and reconfigure the t-reordering timer
b: Instruction indicating to clear PDCP buffer data
c: Instruction indicating that it is intra-CU LTM fast recovery
d: Instruction indicating that a packet of PDCP SN of the count value (N) in the gNB 100 is regarded as having been received (for example, advance RX_DELIV to the next)
e: Dummy (empty data) of PDCP PDU of the count value (N)
- In the case of e, instead of including the dummy (empty data) of PDCP PDU having the count value (N) in RRCReconfigurationComplete, the dummy (empty data) of PDCP PDU having the count value (N) may be transmitted before RRCReconfigurationComplete.
f: Instruction to treat the RRCReconfigurationComplete message itself as out of order delivery

Further, the instructions of a to d may be transmitted by being included in any of the locations shown below.
- PDCP header
- PDCP control PDU
- MAC CE, MAC PDU header, PUCCH

Furthermore, when receiving the instruction of a to d, f (or dummy of e), the gNB 100 may perform at least one operation of A to E shown below.

A: Immediately expire the t-reordering timer in the gNB 100. Perform the operation described in TS 38.323 5.2.2.2.

B: Immediately stop the t-reordering timer in the gNB 100 and reconfigure the t-reordering timer.

C: Shorten the timer value of the t-reordering timer in the gNB 100 (for example, 0 ms, 1 ms).

D: Regard the packet of PDCP SN of the count value (N) as having been received in the gNB 100 (for example, advance RX_DELIV to the next).

E: Treat the RRCReconfigurationComplete message including the instruction of a to d, f (or dummy of e) as out of order delivery in the gNB 100.

### (4) Operations and Effects

According to Operation Example 1 described above, the mechanism of fast recovery in LTM is rationalized, and radio communication resistant to RLF/HOF/LTM Failure becomes possible. Further, according to Operation Example 2 described above, the mechanism of BFR in LTM is improved, and radio communication resistant to BF becomes possible.

Furthermore, according to Operation Example 3 described above, when preventing reuse of a keystream in intra-CU LTM fast recovery, delay caused by PDCP SN gap can be suppressed.

### (5) Other Embodiments

Although the contents of the present invention have been described above along with the embodiments, the present invention is not limited to these descriptions, and it is obvious to those skilled in the art that various modifications and improvements are possible.

In the above-described disclosure, "exceeding a predetermined threshold" may be read as "equal to or more than a predetermined threshold". In this case, "equal to or less than a predetermined threshold" is read as "less than a predetermined threshold".

In the above-described disclosure, step S12 of confirming whether or not an excellent LTM candidate exists may be omitted, and other steps may be omitted as appropriate. For example, step S16 of determining whether or not the UE 200 holds TA may be omitted, and the process may proceed to step S17-2 of executing RACH-based fast recovery. Further, step S02 and step S22 of performing early sync may be omitted, and in this case, the omission of step S16 described above may be combined.

In the above-described disclosure, the radio communication system 10 may include a relay station (not shown) that relays radio communication between the UE 200 and the gNB 100. The relay station is, for example, a satellite such as a GEO (Geostationary Earth Orbit) satellite, a MEO (Middle Earth Orbit) satellite, or a LEO (Low Earth Orbit) satellite. Further, the relay station may be a High Altitude Platform Station (HAPS) mounted on an airship, a balloon, or the like, or may be a commercial aircraft (Air to Ground, ATG). When a relay station is included, there is a tendency for propagation delay to increase, so RACH-less fast recovery by prior acquisition of TA described above is more effective.

The operation examples described above may be combined and applied in a complex manner as long as no contradiction arises.

In the above-described disclosure, "configure", "activate", "update", "indicate", "enable", "specify", and "select" may be read as each other. Similarly, "link", "associate", "correspond", and "map" may be read as each other, and "allocate", "assign", "monitor", and "map" may be read as each other.

Furthermore, "specific", "dedicated", "UE-specific", and "UE-dedicated" may be read as each other. Similarly, "common", "shared", "group-common", "UE-common", and "UE-shared" may be read as each other.

The block configuration diagrams (Fig. 4, Fig. 5) used in the description of the above-described embodiments show blocks in functional units. These functional blocks (configuration units) are realized by any combination of at least one of hardware and software. Further, the method for realizing each functional block is not particularly limited. That is, each functional block may be realized using one physically or logically coupled device, or may be realized by directly or indirectly connecting two or more physically or logically separated devices (for example, using wired, wireless, etc.) and using these plurality of devices. The functional block may be realized by combining software with the one device or the plurality of devices.

Functions include, but are not limited to, judging, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that functions transmission is referred to as a transmitting unit or a transmitter. In any case, as described above, the realization method is not particularly limited.

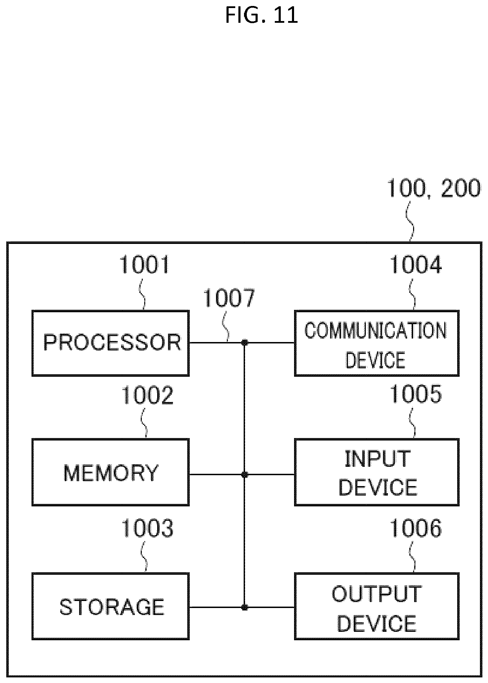

Furthermore, the gNB 100 and the UE 200 (the device) described above may function as a computer that performs processing of the radio communication method of the present disclosure. Fig. 11 is a diagram showing an example of a hardware configuration of the device. As shown in Fig. 11, the device may be configured as a computer device including a processor 1001, a memory 1002, a storage 1003, a communication device 1004, an input device 1005, an output device 1006, a bus 1007, and the like.

Note that, in the following description, the wording "device" can be read as a circuit, a device, a unit, or the like. The hardware configuration of the device may be configured to include one or a plurality of devices shown in the figure, or may be configured not to include some devices.

Each functional block (Fig. 4, Fig. 5) of the device is realized by any hardware element of the computer device or a combination of the hardware elements.

Further, each function in the device is realized by reading predetermined software (program) onto hardware such as the processor 1001 and the memory 1002, so that the processor 1001 performs calculation, controls communication by the communication device 1004, or controls at least one of reading and writing of data in the memory 1002 and the storage 1003.

The processor 1001 controls the entire computer by operating an operating system, for example. The processor 1001 may be configured by a Central Processing Unit (CPU) including an interface with peripheral devices, a control device, a calculation device, a register, and the like.

Further, the processor 1001 reads a program (program code), a software module, data, etc. from at least one of the storage 1003 and the communication device 1004 to the memory 1002, and executes various processes according to these. As the program, a program that causes a computer to execute at least a part of the operations described in the above-described embodiments is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, etc. capable of executing the method according to one embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium described above may be, for example, a database, a server, or other appropriate media including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include a high-frequency switch, a duplexer, a filter, a frequency synthesizer, etc. in order to realize at least one of, for example, Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that implements output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware.

Also, notification of information is not limited to the aspects/embodiments described in the present disclosure, and may be performed using other methods. For example, notification of information may be implemented by physical layer signaling (for example, Downlink Control Information (DCI), Uplink Control Information (UCI)), upper layer signaling (for example, Radio Resource Control (RRC) signaling, Medium Access Control (MAC) signaling), broadcast information (Master Information Block (MIB), System Information Block (SIB)), other signals, or a combination thereof. Also, RRC signaling may be referred to as an RRC message, and may be, for example, an RRC Connection Setup message, an RRC Connection Reconfiguration message, or the like.

Each aspect/embodiment described in the present disclosure may be applied to at least one of a system utilizing Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system extended based on these. Also, a plurality of systems may be combined (for example, a combination of at least one of LTE and LTE-A with 5G, etc.) and applied.

The processing procedures, sequences, flowcharts, etc. of each aspect/embodiment described in the present disclosure may be reordered as long as there is no contradiction. For example, for the methods described in the present disclosure, elements of various steps are presented using an exemplary order, and are not limited to the specific order presented.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW may be considered, but not limited thereto). Although the case where there is one other network node other than the base station is illustrated above, it may be a combination of a plurality of other network nodes (for example, MME and S-GW).

Information, signals (information, etc.) can be output from an upper layer (or lower layer) to a lower layer (or upper layer). It may be input and output via a plurality of network nodes.

Input and output information may be stored in a specific location (for example, memory) or may be managed using a management table. Input and output information can be overwritten, updated, or appended. Output information may be deleted. Input information may be transmitted to other devices.

Determination may be performed by a value represented by 1 bit (0 or 1), may be performed by a Boolean value (Boolean: true or false), or may be performed by comparison of numerical values (for example, comparison with a predetermined value).

Each aspect/embodiment described in the present disclosure may be used alone, may be used in combination, or may be switched and used in accordance with execution. Also, notification of predetermined information (for example, notification of "being X") is not limited to being performed explicitly, and may be performed implicitly (for example, not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, etc., regardless of whether it is referred to as software, firmware, middleware, microcode, hardware description language, or by other names.

Also, software, instructions, information, etc. may be transmitted and received via a transmission medium. For example, when software is transmitted from a website, a server, or other remote sources using at least one of wired technology (coaxial cable, optical fiber cable, twisted pair, Digital Subscriber Line (DSL), etc.) and wireless technology (infrared, microwave, etc.), at least one of these wired technology and wireless technology is included within the definition of the transmission medium.

Information, signals, etc. described in the present disclosure may be represented using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Also, a component carrier (CC) may be referred to as a carrier frequency, a cell, a frequency carrier, or the like.

The terms "system" and "network" used in the present disclosure are used interchangeably.

Also, information, parameters, etc. described in the present disclosure may be represented using absolute values, may be represented using relative values from predetermined values, or may be represented using other corresponding information. For example, radio resources may be indicated by an index.

The names used for the parameters described above are not limiting names in any respect. Furthermore, mathematical formulas etc. using these parameters may differ from those explicitly disclosed in the present disclosure. Since various channels (for example, PUCCH, PDCCH, etc.) and information elements can be identified by any suitable names, the various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. A base station may be referred to by terms such as macro cell, small cell, femto cell, and pico cell.

A base station can accommodate one or a plurality of (for example, three) cells (also referred to as sectors). When a base station accommodates a plurality of cells, the entire coverage area of the base station can be divided into a plurality of smaller areas, and each smaller area can also provide communication services by a base station subsystem (for example, an indoor small base station (Remote Radio Head: RRH)).

The term "cell" or "sector" refers to a part or the whole of the coverage area of at least one of a base station and a base station subsystem that performs communication services in this coverage.

In the present disclosure, terms such as "Mobile Station (MS)", "user terminal", "User Equipment (UE)", and "terminal" can be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of a base station and a mobile station may be referred to as a transmission device, a reception device, a communication device, or the like. Note that at least one of a base station and a mobile station may be a device mounted on a moving body, the moving body itself, or the like. The moving body may be a vehicle (for example, a car, an airplane, etc.), may be a moving body that moves unmanned (for example, a drone, an autonomous driving car, etc.), or may be a robot (manned type or unmanned type). Note that at least one of a base station and a mobile station includes a device that does not necessarily move during communication operation. For example, at least one of a base station and a mobile station may be an Internet of Things (IoT) device such as a sensor.

Also, a base station in the present disclosure may be read as a mobile station (user terminal, same applies hereinafter). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions that the base station has. Also, wordings such as "uplink" and "downlink" may be read as wordings corresponding to inter-terminal communication (for example, "side"). For example, an uplink channel, a downlink channel, etc. may be read as a side channel.

Similarly, a mobile station in the present disclosure may be read as a base station. In this case, the base station may have the functions that the mobile station has.

A radio frame may be configured by one or a plurality of frames in the time domain. Each of one or a plurality of frames in the time domain may be referred to as a subframe.

A subframe may be further configured by one or a plurality of slots in the time domain. A subframe may be a fixed time length (for example, 1 ms) that does not depend on numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in the frequency domain, specific windowing processing performed by a transceiver in the time domain, and the like.

A slot may be configured by one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be configured by one or a plurality of symbols in the time domain. Also, a mini-slot may be referred to as a sub-slot. A mini-slot may be configured by a smaller number of symbols than a slot. PDSCH (or PUSCH) transmitted in a time unit larger than a mini-slot may be referred to as PDSCH (or PUSCH) mapping type A. PDSCH (or PUSCH) transmitted using a mini-slot may be referred to as PDSCH (or PUSCH) mapping type B.

A radio frame, a subframe, a slot, a mini-slot, and a symbol all represent a time unit when transmitting a signal. A radio frame, a subframe, a slot, a mini-slot, and a symbol may be referred to by other names corresponding thereto respectively.

For example, one subframe may be referred to as a Transmission Time Interval (TTI), a plurality of consecutive subframes may be referred to as a TTI, or one slot or one mini-slot may be referred to as a TTI. That is, at least one of a subframe and a TTI may be a subframe (1 ms) in existing LTE, may be a period shorter than 1 ms (for example, 1-13 symbols), or may be a period longer than 1 ms. Note that the unit representing TTI may be referred to as a slot, a mini-slot, etc. instead of a subframe.

Here, TTI refers to, for example, a minimum time unit of scheduling in radio communication. For example, in an LTE system, a base station performs scheduling to allocate radio resources (frequency bandwidth, transmission power, etc. that can be used in each user terminal) to each user terminal in TTI units. Note that the definition of TTI is not limited to this.

TTI may be a transmission time unit of a channel-coded data packet (transport block), code block, codeword, etc., or may be a processing unit of scheduling, link adaptation, etc. Note that when TTI is given, a time interval (for example, the number of symbols) in which a transport block, a code block, a codeword, etc. are actually mapped may be shorter than the TTI.

Note that when one slot or one mini-slot is referred to as a TTI, one or more TTIs (that is, one or more slots or one or more mini-slots) may be the minimum time unit of scheduling. Also, the number of slots (number of mini-slots) constituting the minimum time unit of scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than a normal TTI may be referred to as a shortened TTI, a short TTI, a partial or fractional TTI, a shortened subframe, a short subframe, a mini-slot, a sub-slot, a slot, or the like.

Note that a long TTI (for example, a normal TTI, a subframe, etc.) may be read as a TTI having a time length exceeding 1 ms, and a short TTI (for example, a shortened TTI, etc.) may be read as a TTI having a TTI length less than the TTI length of a long TTI and equal to or more than 1 ms.

A resource block (RB) is a resource allocation unit in the time domain and the frequency domain, and may include one or a plurality of consecutive subcarriers in the frequency domain. The number of subcarriers included in an RB may be the same regardless of numerology, and may be, for example, 12. The number of subcarriers included in an RB may be determined based on numerology.

Also, the time domain of an RB may include one or a plurality of symbols, and may be a length of one slot, one mini-slot, one subframe, or one TTI. One TTI, one subframe, etc. may be configured by one or a plurality of resource blocks respectively.

Note that one or a plurality of RBs may be referred to as a Physical RB (PRB), a Sub-Carrier Group (SCG), a Resource Element Group (REG), a PRB pair, an RB pair, or the like.

Also, a resource block may be configured by one or a plurality of Resource Elements (RE). For example, one RE may be a radio resource region of one subcarrier and one symbol.

A Bandwidth Part (BWP) (may be referred to as a partial bandwidth, etc.) may represent a subset of consecutive common RBs (common resource blocks) for a certain numerology in a certain carrier. Here, a common RB may be identified by an index of an RB based on a common reference point of the carrier. A PRB may be defined in a certain BWP and numbered within the BWP.

BWP may include BWP for UL (UL BWP) and BWP for DL (DL BWP). One or a plurality of BWPs may be configured within one carrier for a UE.

At least one of the configured BWPs may be active, and a UE does not have to assume transmitting/receiving a predetermined signal/channel outside the active BWP. Note that "cell", "carrier", etc. in the present disclosure may be read as "BWP".

The structures of the radio frame, subframe, slot, mini-slot, symbol, etc. described above are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in an RB, and the number of symbols, symbol length, Cyclic Prefix (CP) length, etc. in a TTI can be changed variously.

The terms "connected", "coupled", or any variation thereof means any direct or indirect connection or coupling between two or more elements, and can include the presence of one or more intermediate elements between two elements that are "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in the radio frequency region, microwave region, and light (both visible and invisible) region, etc.

A reference signal can be abbreviated as Reference Signal (RS), and may be referred to as a pilot (Pilot) depending on the standard applied.

The description "based on" used in the present disclosure does not mean "based only on" unless explicitly stated otherwise. In other words, the description "based on" means both "based only on" and "based at least on".

"Means" in the configuration of each device described above may be replaced with "unit", "circuit", "device", etc.

Any reference to elements using designations such as "first", "second", etc. used in the present disclosure does not generally limit the amount or order of those elements. These designations can be used in the present disclosure as a convenient method for distinguishing between two or more elements. Therefore, references to the first and second elements do not imply that only two elements can be employed there, or that the first element must precede the second element in some way.

In the present disclosure, when "include", "including", and variations thereof are used, these terms are intended to be inclusive, similar to the term "comprising". Furthermore, the term "or" used in the present disclosure is intended not to be an exclusive OR.

In the present disclosure, when articles are added by translation, for example, a, an, and the in English, the present disclosure may include that nouns following these articles are plural.

The terms "determining" and "deciding" used in the present disclosure may encompass a wide variety of operations. "Determining" and "deciding" may include, for example, regarding judging, calculating, computing, processing, deriving, investigating, looking up, search, inquiry (for example, looking up in a table, a database, or another data structure), and ascertaining as "determining" and "deciding". Also, "determining" and "deciding" may include regarding receiving (for example, receiving information), transmitting (for example, transmitting information), input, output, and accessing (for example, accessing data in a memory) as "determining" and "deciding". Also, "determining" and "deciding" may include regarding resolving, selecting, choosing, establishing, comparing, etc. as "determining" and "deciding". That is, "determining" and "deciding" may include regarding some operation as "determining" and "deciding". Also, "determining (deciding)" may be read as "assuming", "expecting", "considering", etc.

In the present disclosure, the term "A and B are different" may mean "A and B are different from each other". Note that the term may mean "A and B are different from C respectively". Terms such as "separated", "coupled", etc. may be interpreted similarly to "different".

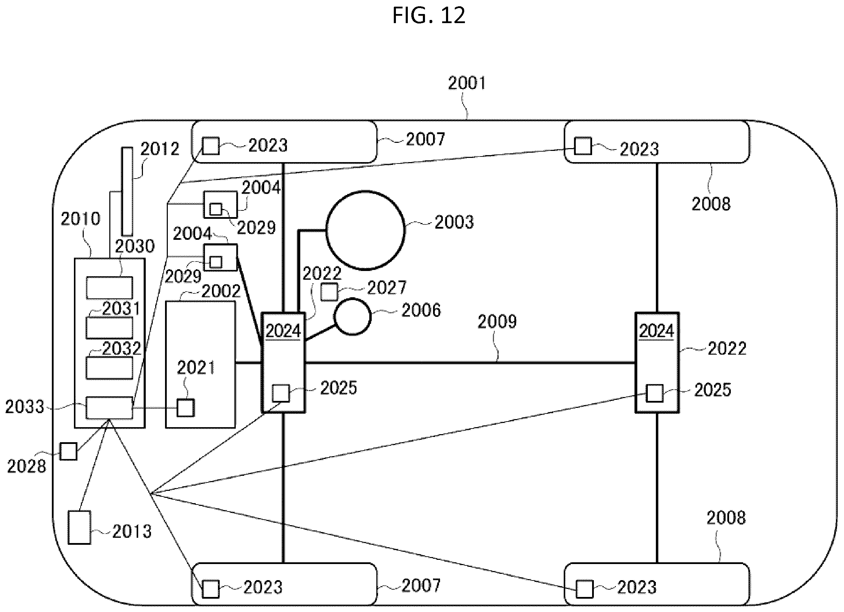

Fig. 12 shows a configuration example of a vehicle 2001. As shown in Fig. 12, the vehicle 2001 comprises a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also referred to as a handle), and is configured to steer at least one of the front wheels and the rear wheels based on an operation of the steering wheel operated by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from various sensors 2021 to 2028 include a current signal from the current sensor 2021 that senses a current of the motor, a rotation speed signal of the front wheels or the rear wheels acquired by the rotation speed sensor 2022, an air pressure signal of the front wheels or the rear wheels acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, a detection signal for detecting an obstacle, a vehicle, a pedestrian, etc. acquired by the object detection sensor 2028, and the like.

The information service unit 2012 is configured by various devices for providing various information such as driving information, traffic information, and entertainment information, such as a car navigation system, an audio system, a speaker, a television, and a radio, and one or more ECUs controlling these devices. The information service unit 2012 uses information acquired from an external device via the communication module 2013 or the like to provide various multimedia information and multimedia services to an occupant of the vehicle 2001.

The driver assistance system unit 2030 is configured by various devices for providing functions for preventing accidents or reducing driving load of a driver, such as a millimeter wave radar, LiDAR (Light Detection and Ranging), a camera, a positioning locator (for example, GNSS, etc.), map information (for example, High Definition (HD) map, Autonomous Vehicle (AV) map, etc.), a gyro system (for example, IMU (Inertial Measurement Unit), INS (Inertial Navigation System), etc.), an AI (Artificial Intelligence) chip, and an AI processor, and one or more ECUs controlling these devices. Also, the driver assistance system unit 2030 transmits and receives various information via the communication module 2013 to realize a driver assistance function or an autonomous driving function.

The communication module 2013 can communicate with the microprocessor 2031 and components of the vehicle 2001 via the communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001 via the communication port 2033.

The communication module 2013 is a communication device capable of being controlled by the microprocessor 2031 of the electronic control unit 2010 and capable of communicating with an external device. For example, it transmits and receives various information to and from an external device via radio communication. The communication module 2013 may be inside or outside the electronic control unit 2010. The external device may be, for example, a base station, a mobile station, or the like.

The communication module 2013 transmits the current signal from the current sensor input to the electronic control unit 2010 to an external device via radio communication. Also, the communication module 2013 transmits the rotation speed signal of the front wheels or the rear wheels acquired by the rotation speed sensor 2022, the air pressure signal of the front wheels or the rear wheels acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, etc. acquired by the object detection sensor 2028, etc., which are input to the electronic control unit 2010, to an external device via radio communication.

The communication module 2013 receives various information (traffic information, signal information, inter-vehicle information, etc.) transmitted from an external device, and displays it on the information service unit 2012 provided in the vehicle. Also, the communication module 2013 stores various information received from an external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, etc. provided in the vehicle 2001.

Although the present disclosure has been described in detail above, it is obvious to those skilled in the art that the present disclosure is not limited to the embodiments described in the present disclosure. The present disclosure can be implemented as modified and changed aspects without departing from the spirit and scope of the present disclosure defined by the description of the claims. Therefore, the description of the present disclosure is for the purpose of exemplary description, and does not have any limiting meaning to the present disclosure.

### (Supplementary Note)

The above-described disclosure may be expressed as follows.

The first feature is a terminal comprising: a control unit that executes transition to a candidate cell without requesting a base station for the transition in a layer lower than a Radio Resource Control layer; and a transmission unit that transmits, to the candidate cell, a message including a count value for deriving a security key required every time the candidate cell is changed, wherein, when the message is not received, the control unit includes, in the message transmitted to another candidate cell, a count value obtained by incrementing the count value, and an instruction to expire a timer for detecting a loss of a packet in a Packet Data Convergence Protocol (PDCP) layer.

The second feature is the terminal according to the first feature, wherein the control unit includes an instruction to clear buffer data of the PDCP layer in the message transmitted to the another candidate cell.

The third feature is the terminal according to the first or second feature, wherein the control unit includes an instruction indicating that the transition is an intra-CU transition in the message transmitted to the another candidate cell.

The fourth feature is the terminal according to any one of the first to third features, wherein the control unit includes an instruction to regard the packet of the count value as having been received in the message transmitted to the another candidate cell.

The fifth feature is the terminal according to any one of the first to fourth features, wherein the control unit includes a dummy of the packet of the count value in the message transmitted to the another candidate cell.

The sixth feature is the terminal according to any one of the first to fifth features, wherein the control unit includes an instruction indicating to treat the message as out of order delivery in the message transmitted to the another candidate cell.

### DESCRIPTION OF REFERENCE NUMERALS

10 Radio communication system
20 NG-RAN
100 gNB
110 Transmission/reception unit
120 Generation unit
130 Control unit
200 UE
210 Transmission/reception unit
220 Detection unit
230 Generation unit
240 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A terminal comprising:
a control unit that executes transition to a candidate cell without requesting a base station for the transition in a layer lower than a Radio Resource Control layer; and
a transmission unit that transmits, to the candidate cell, a message including a count value for deriving a security key required every time the candidate cell is changed, wherein
when the message is not received, the control unit includes, in the message transmitted to another candidate cell, a count value obtained by incrementing the count value, and an instruction to expire a timer for detecting a loss of a packet in a Packet Data Convergence Protocol (PDCP) layer.

2. The terminal according to claim 1, wherein the control unit includes an instruction to clear buffer data of the PDCP layer in the message transmitted to the another candidate cell.

3. The terminal according to claim 1, wherein the control unit includes an instruction indicating that the transition is an intra-CU transition in the message transmitted to the another candidate cell.

4. The terminal according to claim 1, wherein the control unit includes an instruction to regard the packet of the count value as having been received in the message transmitted to the another candidate cell.

5. The terminal according to claim 1, wherein the control unit includes a dummy of the packet of the count value in the message transmitted to the another candidate cell.

6. The terminal according to claim 1, wherein the control unit includes an instruction indicating to treat the message as out of order delivery in the message transmitted to the another candidate cell.
